# EUROPEAN PATENT APPLICATION

(11) **EP 3 038 350 A1**
(43) Date of publication of application: **29.06.2016**
(21) Application number: 14837694.0
(22) Date of filing: 19.08.2014
(51) Int. Cl.: H04N 5/44, H04N 21/41, H04N 21/2381

(54) **IMAGE DISPLAY DEVICE AND METHOD FOR OPERATING IMAGE DISPLAY DEVICE**

(30) Priority: 19.08.2013 US 201361867166 P
(71) Applicant: LG Electronics Inc., Seoul 07336 (KR)
(72) Inventor: YOON, Joonhee, Seoul 137-893 (KR); SUH, Jongyeul, Seoul 137-893 (KR); KIM, Soyoung, Seoul 137-893 (KR); HWANG, Soojin, Seoul 137-893 (KR); OH, Hyunmook, Seoul 137-893 (KR)
(74) Representative: Cabinet Plasseraud
(86) International application number: PCT/KR2014/007702
(87) International publication number: WO 2015/026141

(57) **Abstract**

An image display device is provided. A broadcast receiving unit receives a broadcast signal. A control unit installs and uninstalls, according to a user input, a broadcast service receiving application that receives a broadcast service in the broadcast signal.

## Description

### TECHNICAL FIELD

The present disclosure relates to an image display device and a method for operating an image display device.

### BACKGROUND ART

A broadcast service transmits content associated with culture. Thus, the broadcast service reflects the property of each country and each region in each country. Therefore, the broadcast service is usually provided by an individual broadcast service provider according to each country and each region in each country. Thus, the transmission standard and method of the broadcast service are also different according to each region. In particular, the algorithm of a conditional access system (CAS) for providing a pay-per-view broadcast may vary according to the broadcaster of each region. Also, information on the broadcast service may also vary according to the broadcaster of each region.

Image display device manufacturers perform mass production with the same standard for the maximum profit generation. Thus, the image display device manufacturers do not support a broadcast receiving function for a small region. Also, the image display device generally includes only a terrestrial tuner for terrestrial broadcast service reception. Therefore, users generally use a broadcast receiving device, e.g., a set-top box according to the property of each region to receive the broadcast service and connect a video output from the broadcast receiving device to a TV.

However, it is recently important that the image display device provides an application that may provide additional services in addition to fundamental functions. Thus, the image display device manufacturers attempt to integrate the software platforms of the image display device so that various applications may be supported. In the integrated software platform environment, a method is being discussed in which the broadcast service is not received through an external broadcast receiving device in the same manner as the present system, and a broadcast receiving application that corresponds to each region is individually installed in the image display device to receive the broadcast service.

### DISCLOSURE OF THE INVENTION

### TECHNICAL PROBLEM

Embodiments provide an image display device that uses an application capable of being individually installed and uninstalled to receive a broadcast service, and an operating method of an image display device.

### TECHNICAL SOLUTION

In one embodiment, an image display device includes a broadcast signal receiving unit receiving a broadcast signal; and a control unit installing and uninstalling, according to a user input, a broadcast service receiving application that receives a broadcast service in the broadcast signal.

The image display device may further include an internet protocol (IP) communication unit that transmits information on the image display device and information on a user of the image display device, to a subscription information server that manages information on a broadcast service package subscriber, wherein the subscription information server may change broadcast service information on the broadcast service based on the information on the image display device and the information on the user of the image display device.

The information on the image display device may include an image display device identifier that identifies the image display device.

The information on usage of the image display device may include a user identifier that identifies the user of the image display device, and a password that corresponds to the user identifier.

The IP communication unit may transmit a service package identifier that identifies a service package to which the user of the image display device subscribes, and the subscription information server may change broadcast service information on the broadcast service based on the service package identifier.

The broadcast service information may include conditional access system (CAS) data that is needed to descramble a scrambled broadcast stream.

The image display device may further include an internet protocol (IP) communication unit that transmits information on a version of the broadcast receiving application to a subscription information server managing information on a broadcast service package subscriber, and receive whether there is a need to upgrade the broadcast service receiving application.

The control unit may upgrade the broadcast service receiving application to a higher version of broadcast service receiving application through a background process that is performed without usage of the image display device by a user.

The control unit may upgrade the broadcast service receiving application to a higher version of broadcast receiving application at a time that is determined based on a user input.

The control unit may upgrade the broadcast service receiving application to a higher version of broadcast receiving application, when a user's turn-off input related to the image display device is received.

In another embodiment, a method of operating an image display device includes receiving a broadcast signal through a broadcast signal receiving unit; and receiving a broadcast service in the broadcast signal through a broadcast service receiving application that is controlled by a control unit, wherein the broadcast service receiving application is installed and un-installed according to a user user input.

### ADVANTAGEOUS EFFECTS

Embodiments provide an image display device that uses an application capable of being individually installed and uninstalled to receive a broadcast service, and an operating method of an image display device.

Accordingly, the image display device may receive a broadcast conforming to the standard of each region even without an external broadcast receiving device.

### BRIEF DESCRIPTION OF THE DRAWINGS

Figs. 1a and 1b show how an image display device receives a broadcast service through a broadcast receiving device and how the image display device receives a broadcast service through a broadcast service receiving application capable of being individually installed and uninstalled.
Fig. 2 shows the configuration of an image display device according to an embodiment.
Fig. 3 is a flowchart that shows how an image display device operates according to user's service package subscription and subscription cancellation, according to an embodiment.
Fig. 4 is a ladder diagram that shows how an image display device operates according to a user's service package subscription input, according to an embodiment.
Fig. 5 is a ladder diagram that shows how an image display device is allocated an IP address, according to an embodiment.
Fig. 6 is a ladder diagram that shows how an image display device is allocated an IP address, according to another embodiment.
Fig. 7 is a ladder diagram that shows how an image display device receives a broadcast service, according to an embodiment.
Fig. 8 shows a user interface that enables an image display device to execute a broadcast service receiving application, according to an embodiment.
Fig. 9 shows a user interface that enables an image display device to execute a broadcast service receiving application, according to another embodiment.
Fig. 10 is a ladder diagram that shows how a broadcast receiving device is allocated an IP address to receive a broadcast service through a broadcast service receiving application, according to an embodiment.
Fig. 11 is a ladder diagram that shows how a broadcast receiving device is allocated an IP address to receive a broadcast service through a broadcast service receiving application, according to another embodiment.
Fig. 12 is a ladder diagram that shows how an image display device receives a broadcast service, according to another embodiment.
Fig. 13 is a ladder diagram that shows how an image display device operates according to a user's service package subscription cancellation input, according to an embodiment.

### MODE FOR CARRYING OUT THE INVENTION

Embodiments are described below in detail with reference to the accompanying drawings so that a person skilled in the art may easily practice the inventive concept. However, the inventive concept may be implemented in many different forms and is not limited to embodiments that are described herein. In addition, parts irrelevant to descriptions are not provided in the drawings in order to make the inventive concept clear and similar parts throughout the disclosure have similar reference numerals.

Also, when it is described that one "includes" some elements, it should be understood that it may further include other elements as well as those elements if there is no specific limitation.

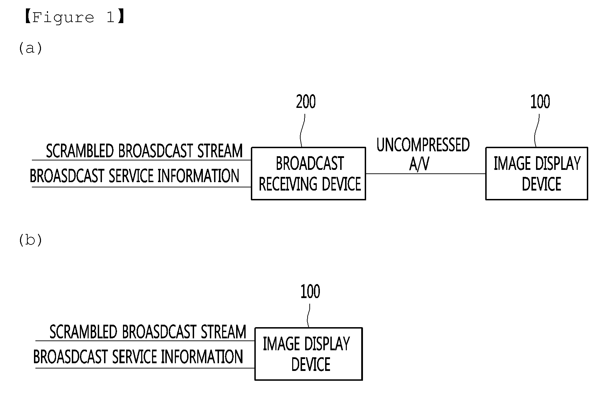

Fig. 1 shows how an image display device receives a broadcast service through a broadcast receiving device and how the image display device receives a broadcast service through a broadcast service receiving application capable of being individually installed and uninstalled.

Fig. 1a shows how an image display device 100 displays a broadcast service by using a broadcast receiving device 200. The broadcast receiving device 200 receives a scrambled broadcast stream and broadcast information. The broadcast receiving device 200 descrambles the scrambled broadcast stream by using the broadcast information to output uncompressed audiovisual content. The image display device 100 receives and displays the uncompressed audiovisual content.

Fig. 1b shows how the image display device 100 receives the broadcast service through a broadcast service receiving application that may be individually installed and uninstalled. In this case, the broadcast receiving application that may be individually installed and uninstalled represents an application that executes the fundamental operation of the image display device 100, such as an image display, and an application that may be individually installed and uninstalled separately from operating system (OS). The image display device 100 receives the scrambled broadcast stream and the broadcast information through the broadcast service receiving application. The broadcast receiving device 200 uses the broadcast information received through the broadcast service receiving application to descramble the scrambled broadcast stream to display the broadcast service.

In the case of Fig. 1a, a separate broadcast receiving device 200 should be purchased or leased in order to receive the broadcast service. Also, a user needs to manipulate both the broadcast receiving device 200 and the image display device 100 in order to enjoy the broadcast service. Also, if a user cancels service package subscription, a broadcast service provider needs to get the broadcast receiving device 200 back. In the case of Fig. 1b, since the broadcast receiving device 200 is replaced with the broadcast receiving application, there is no need to purchase or lease a separate broadcast receiving device 200. Also, the user may manipulate only the image display device 100 to enjoy the broadcast service. If the user cancels the service package subscription, the broadcast service provider only needs to uninstall the broadcast service receiving application from the image display device 100. Thus, using the broadcast service receiving application to receive the broadcast service may increase the convenience of the user and the broadcast service provider in comparison to when the broadcast service is received by using the broadcast receiving device 200.

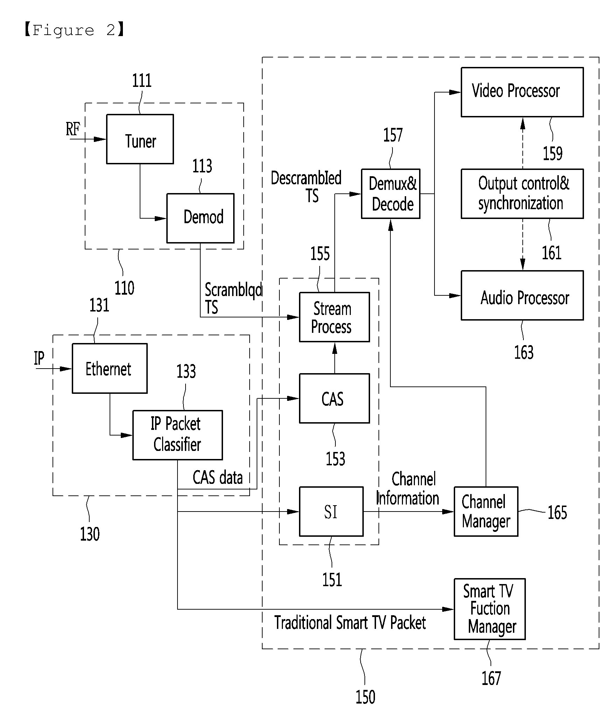

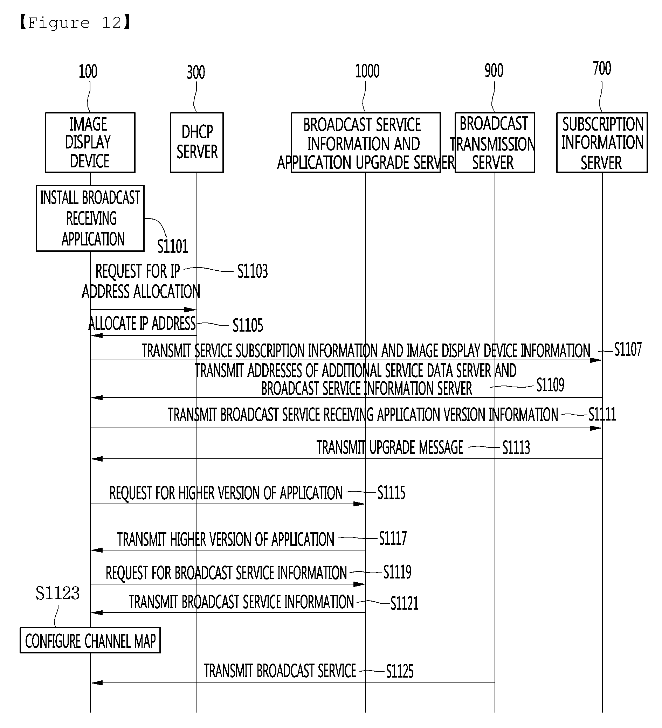

How the image display device 100 receives the broadcast service through the broadcast receiving application that may be individually installed and uninstalled is described in detail with reference to Figs. 2 to 13.

Fig. 2 shows the configuration of an image display device according to an embodiment.

The image display device 100 includes a broadcast receiving unit 110, an internet protocol (IP) communication unit 130, and a control unit 150.

The broadcast receiving unit 110 includes a tuner 111 and a demodulator 113. The tuner 111 receives a broadcast signal. In this case, the tuner 111 may receive at least one of terrestrial, cable and satellite broadcasts. In particular, the tuner 111 may receive at least one of cable and satellite broadcasts to be capable of receiving broadcasts in addition to the terrestrial broadcast without a separate broadcast receiving device 200. The demodulator 113 demodulates the broadcast signal.

The IP communication unit 130 includes an Ethernet terminal 131 and an IP packet classifier 133. The Ethernet terminal 131 transmits and receives an IP packet. The IP packet classifier 133 classifies IP packets.

The control unit 150 includes a service information (SI) data processing unit 151, a conditional access system (CAS) data processing unit 153, a broadcast stream processor 155, a demux and decoder 157, a video processor 159, an output control unit and synchronization unit 161, an audio processor 163, a channel management unit 165, and a smart TV function management unit.

The SI data processing unit 151 processes SI information that signals a broadcast service.

The CAS data processing unit 153 processes CAS data. In particular, it may process an entitlement content message (ECM) and an entitlement management message (EMM) that are needed to descramble a scrambled broadcast stream.

The broadcast stream processor 155 controls a broadcast stream. In particular, the broadcast stream processor 155 may descramble the scrambled broadcast stream. In this case, the broadcast stream processor 155 may be based on information that is received from the CAS data processing unit 153. In this case, the SI data processing unit 151, the CAS data processing unit 153, and the broadcast stream processor 155 may be controlled through a broadcast service receiving application.

The demux and decoder 157 demuxes a broadcast stream to extract an element stream and decode audiovisual content.

The video processor 159 processes a video.

The audio processor 163 processes audio.

The output control unit and synchronization unit 161 controls and synchronizes video and audio outputs.

The channel management unit 165 manages channel information. In this case, the channel management unit 165 may receive SI data from the SI data processing unit 151.

The smart TV function management unit manages additional functions on the image display device. In particular, the smart TV function management unit may mange an application that may be individually installed in and uninstalled from the image display device 100 and the image display device 100.

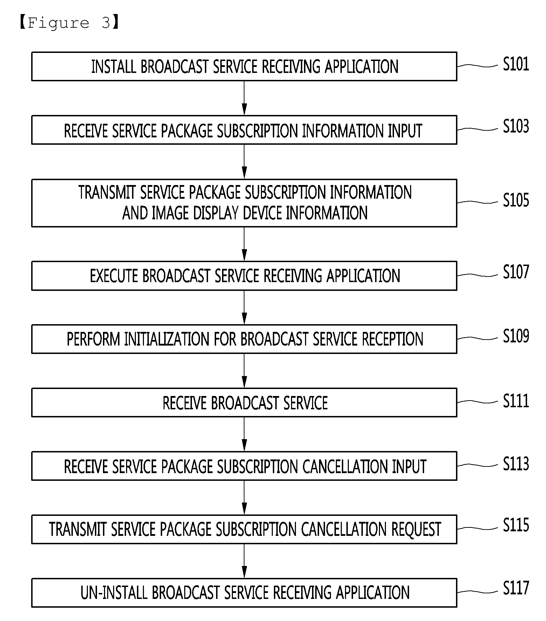

The operation of the image display device 100 according to an embodiment is described through Figs. 3 to 13.

Fig. 3 is a flowchart that shows how an image display device operates according to user's service package subscription and subscription cancellation, according to an embodiment.

The image display device 100 installs a broadcast service receiving application through the control unit 150 in step S101. As described earlier, the image display device 100 may install the broadcast service receiving application through the control unit 150, separately from an application that executes the fundamental operation of the image display device 100, such as an image display, and from OS. In this case, a user may be in a state in which he or she has completed service subscription to a broadcast service provider. For example, the user may be in a state in which he or she has completed service subscription to the broadcast service provider through a phone, homepage and so on. In another particular embodiment, the image display device 100 may provide a separate application that assists service subscription. In this case, the image display device 100 may install the broadcast service receiving application through the separate application that assists the service subscription.

The image display device 100 receives a service package subscription information input through the control unit 150 in step S103. In this case, the service package subscription information may include a user identifier that may identify a user, and a password that corresponds to the user identifier. In particular, the user identifier and the password that corresponds thereto may be set when service package subscription is performed. In another particular embodiment, the service package subscription information may include a service package identifier that identifies the service package to which the user has subscribed. In another particular embodiment, the service package subscription information may include payment information that includes information on a service package payment method.

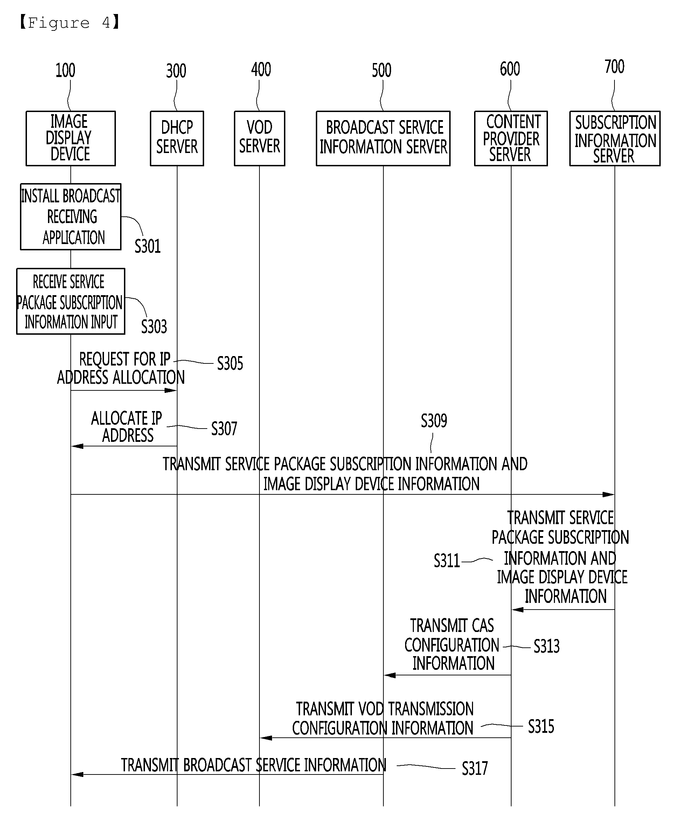

The image display device 100 transmits, through the IP communication unit 130, the service package subscription information that is information on a service package, and image display device information that is information on the image display device 100, in step S105. In this case, the image display device information may include at least one among the image display device identifier that identifies the image display device 100, the media access control (MAC) address of the image display device 100, and OS information on the image display device 100. In this case, the image display device identifier may be a serial number that is assigned when the image display device 100 is manufactured. Also, information on the OS of the image display device 100 may include a type of OS and a version of OS. How the image display device 100 installs the broadcast service application and transmits the service package subscription information and the image display device information is described in detail in Figs. 4 to 6.

Fig. 4 is a ladder diagram that shows how an image display device operates according to a user's service package subscription input, according to an embodiment.

The image display device 100 installs a broadcast receiving application through the control unit 150 in step S301.

The image display device 100 receives a service package subscription information input in step S303. As described earlier, the service package subscription information may include a user identifier that may identify a user, and a password that corresponds to the user identifier. In particular, the user identifier and the password that corresponds thereto may be set when service package subscription is performed. In another particular embodiment, the service package subscription information may include a service package identifier that identifies the service package to which the user has subscribed. In another particular embodiment, the service package subscription information may include payment information that includes information on a service package payment method.

The image display device 100 transmits the service package subscription information and the image display device information through the control unit 150 in step S303. As described earlier, the image display device information may include at least one among the image display device identifier that identifies the image display device 100, the MAC address of the image display device 100, and OS information on the image display device 100. In this case, the image display device identifier may be a serial number that is assigned when the image display device 100 is manufactured.

The image display device 100 requests for IP address allocation from a dynamic host configuration protocol (DHCP) server 300 in step S305.

The DHCP server 300 allocates an IP address to the image display device 100 in step S307. In this case, the DHCP server 300 may transmit, to the image display device 100, at least one among the address of a subscription information server 700 from which it is possible to request for service application and service opening, and the address 500 of a broadcast service information server that transmits broadcast service information. In particular, in the case where the DHCP server 300 uses DHCP version four (DHCPv4), the DHCP server 300 may transmit, to the image display device 100, a DHCP ACK message that includes at least one among the address of the subscription information server 700 and the broadcast service information address 500. In another particular embodiment, in the case where the DHCP server 300 uses DHCPv6, the DHCP server 300 may transmit, to the image display device 100, a DHCP Reply message that includes at least one among the address of the subscription information server 700 and the broadcast service information address 500.

The image display device 100 transmits, to the subscription information server 700, at least one among the service package subscription information and the image display device information in step S309.

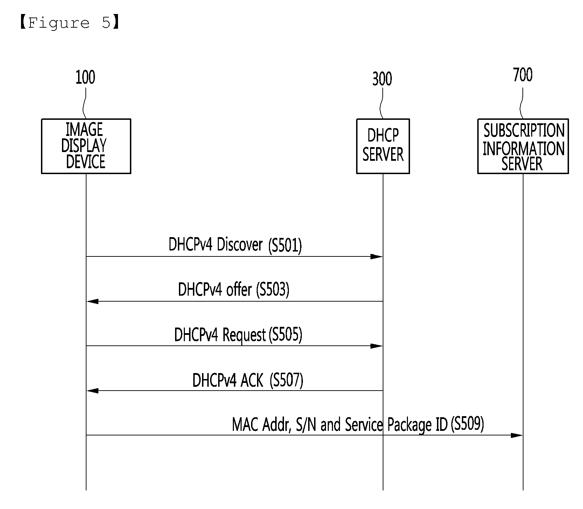

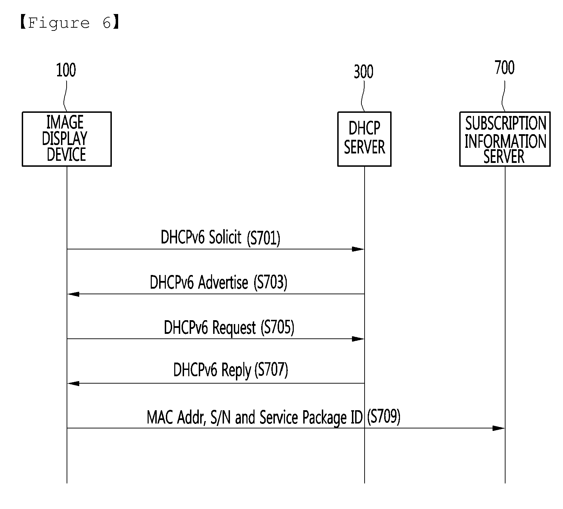

The IP address allocation process and how the image display device 100 transmits, to the subscription information server, at least one among the service package subscription information and the image display device information are described in detail in Figs. 5 and 6.

Fig. 5 is a ladder diagram that shows how an image display device is allocated an IP address, according to an embodiment.

In an embodiment in Fig. 5, the DHCP server operates according to DHCPv4.

The image display device 100 transmits, to the DHCP server 300, a DHCPv4 discover message that searches for a DHCP server, in step S501.

The DHCP server 300 transmits a DHCPv4 offer message that notifies the DHCP server 300 in step S503.

The image display device 100 transmits a DHCPv4 request message that requests for IP address allocation, in step S505.

The DHCP server 400 transmits a DHCPv4 ACK message that allocates an IP address, in step S507. As described earlier, the DHCP server 300 may transmit, to the image display device 100, a DHCP ACK message that includes at least one among the address of the subscription information server 700 and the broadcast service information address 500.

The image display device 100 transmits, to the subscription information server 700, at least one among the service package subscription information and the image display device information in step S509. As described earlier, the service package subscription information may include at least one among a user identifier that may identify a user, a password that corresponds to the user identifier, and a service package identifier. Also, the image display device information may include the image display device identifier, the MAC address of the image display device 100, and OS information on the image display device 100.

Fig. 6 is a ladder diagram that shows how an image display device is allocated an IP address, according to another embodiment.

In an embodiment in Fig. 6, the DHCP server operates according to DHCPv6.

The image display device 100 transmits, to the DHCP server 300, a DHCPv6 solicit message that searches for a DHCP server, in step S701.

The DHCP server 300 transmits a DHCPv6 advertise message that notifies the DHCP server 300, in step S703.

The image display device 100 transmits a DHCPv6 request message that requests for IP address allocation, in step S705.

The DHCP server 400 transmits a DHCPv6 reply message that allocates an IP address, in step S707. As described earlier, the DHCP server 300 may transmit, to the image display device 100, a DHCP Reply message that includes at least one among the address of the subscription information server 700 and the broadcast service information address 500.

The image display device 100 transmits, to the subscription information server 700, at least one among the service package subscription information and the image display device information in step S709. As described earlier, the service package subscription information may include at least one among a user identifier that may identify a user, a password that corresponds to the user identifier, and a service package identifier. Also, the image display device information may include at least one among the image display device identifier, the MAC address of the image display device 100, and OS information on the image display device 100.

The image display device 100 transmits, to the subscription information server 700, at least one among the service package subscription information and the image display device information in step S709. As described earlier, the service package subscription information may include at least one among a user identifier that may identify a user, a password that corresponds to the user identifier, and a service package identifier. Also, the image display device information may include at least one among the image display device identifier, the MAC address of the image display device 100, and OS information on the image display device 100.

Refer back to Fig. 4.

The subscription information server 700 transmits, to a content provider server 600, at least one among the service package subscription information and the image display device information in step S311.

The content provider server 600 transmits CAS configuration information to the broadcast service information server 500 in step S313. In particular, the CAS configuration information may include a broadcast service that the image display device 100 may enjoy, an allowable period, the identifier of the image display device, and the MAC address of the image display device 100. Thus, the CAS configuration information may be set based on at least one among the service package subscription information and the image display device information. For example, the broadcast service that the image display device may enjoy and the allowable period may be set according to a service package to which the user of the image display device 100 has subscribed.

The content provider server 600 transmits vide on demand (VOD) transmission configuration configuration information to a VOD server 400 in step S315. In particular, the VOD transmission configuration information may include at least one among a VOD service that the image display device 100 may enjoy, a VOD allowable period, the identifier of the image display device, and the MAC address of the image display device 100. Thus, the VOD transmission configuration information may be set based on at least one among the service package subscription information and the image display device information. For example, the VOD service that the image display device may enjoy and the VOD allowable period may be set according to a service package to which the user of the image display device 100 has subscribed. Also, in the case where there is a request for a VOD service, the VOD server 400 may identify the image display device 100 based on at least one among the image display device identifier and the MAC address of the image display device 100. Then, the VOD server 400 may transmit VOD data to each image display device 400 according to a corresponding allowable VOD service and VOD allowable period.

The broadcast service information server 500 transmits, to the image display device 100, broadcast service information that signals a broadcast service, in step S317. In this case, the broadcast service information may include CAS data that is needed to descramble a scrambled broadcast stream. In this case, the CAS data may include at least one among the entitlement content message (ECM) and the entitlement management message (EMM). The CAS data may be set based on the broadcast service that the user of the image display device 100 may enjoy and the allowable period as described earlier. In a particular embodiment, the broadcast service information may be received as an XML file format.

Refer back to Fig. 3.

The image display device 100 executes the broadcast service receiving application through the control unit 150 in step S107. In particular, the image display device 100 may execute the broadcast service receiving application based on a user input. Alternatively, the image display device 100 may execute the broadcast service receiving application automatically without the user input. For example, when the image display device 100 is turned on, the image display device 100 may automatically execute the broadcast service receiving application.

The image display device 100 executes initialization for broadcast service reception through the control unit 150 in step S109. In particular, the image display device 100 may be allocated an IP address in the case where the IP address has not been allocated. Also, the image display device 100 may check whether there is a need to upgrade the application, based on a version of broadcast service application. Also, the image display device 100 may transmit a check message with service subscription information. Also, the image display device 100 may receive broadcast service information that includes the CAS data. Also, the image display device 100 may configure a channel map. However, such an initialization operation may be omitted according to the current state of the image display device 100. For example, the image display device 100 may omit an IP address allocation request operation in the case where the IP address of the image display device 100 has been allocated. Also, the image display device 100 may omit a channel map configuration operation in the case where the channel map has already been configured.

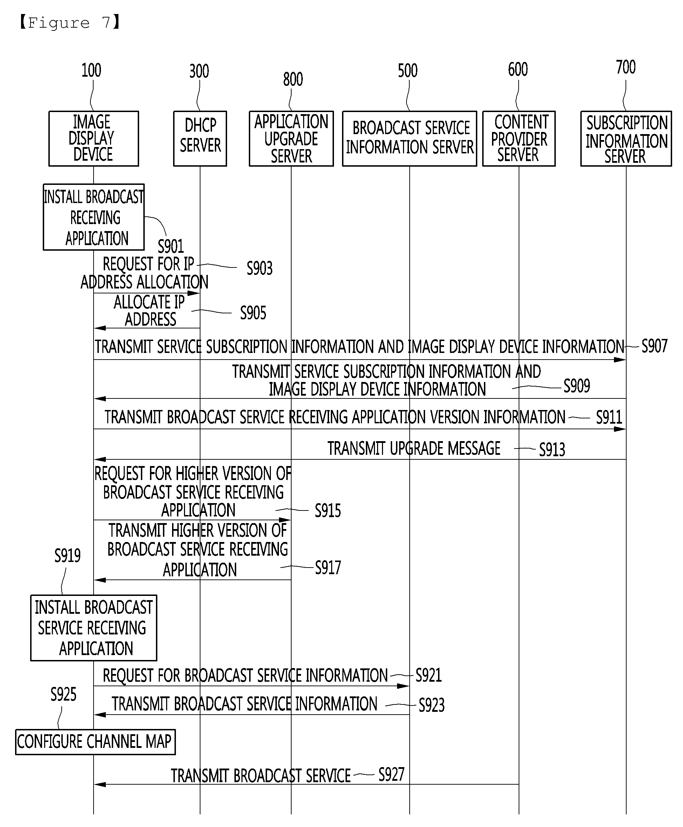

The image display device 100 receives the broadcast service through the broadcast receiving unit 110 in step S301. In particular, the image display device 100 may receive the broadcast service based on the broadcast service information. How the image display device 100 executes the broadcast receiving application and receives the broadcast service is described in detail in Figs. 7 to 12.

Fig. 7 is a ladder diagram that shows how an image display device receives a broadcast service, according to an embodiment.

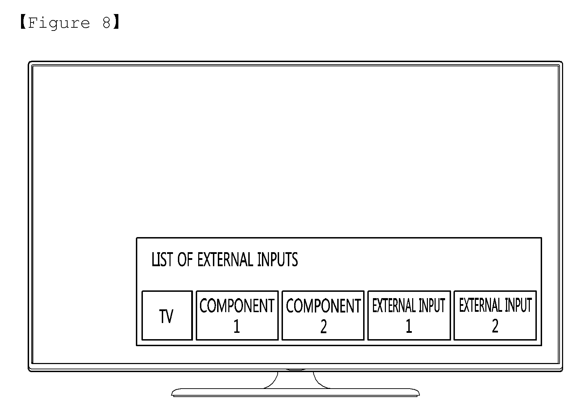

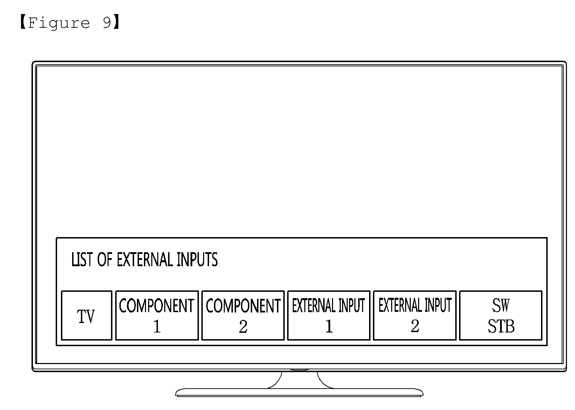

The image display device 100 executes the broadcast service receiving application through the control unit 150 in step S901. As described earlier, the image display device 100 may execute the broadcast service receiving application based on the user input. Alternatively, the image display device 100 may execute the broadcast service receiving application automatically without the user input. In the case where the broadcast service receiving application is executed based on the user input, the image display device 100 may display the broadcast receiving application as one external input on a list of external inputs. Related descriptions are provided with reference to Figs. 8 and 9.

Fig. 8 shows a user interface that enables an image display device to execute a broadcast service receiving application, according to an embodiment. Fig. 9 shows a user interface that enables an image display device to execute a broadcast service receiving application, according to another embodiment.

As shown in Fig. 8, a general image display device 100 displays audiovisual content input to the image display device 100 through a list of external input terminals and enables a user to select an external input. Users are used to such a user interface. Thus, for the intuitive understanding of users, the image display device 100 may display a broadcast service received through the broadcast service receiving application as one external input as shown in Fig. 9. The broadcast service that is received through the broadcast service receiving application is not the audiovisual content that is input through the external input terminal, but by displaying as in Fig. 9, a user may intuitively understand the function. In another particular embodiment, the image display device 100 may display the broadcast service receiving application as an output from the image display device 100, not a separate external input, on the list of external inputs as in Fig. 8.

Refer back to Fig. 7.

The image display device 100 requests for IP address allocation from the DHCP server 300 in step S903.

The DHCP server 300 allocates an IP address to the image display device 100 in step S905.

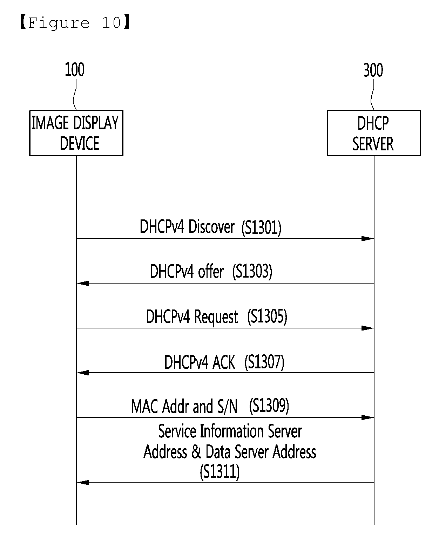

In this case, the operation of the image display device 100 is similar to the IP address allocation operation in the broadcast service receiving application installation process as described in Fig. 4. However, the image display device 100 may receive, from the DHCP server 300, the address of the broadcast service information server 500 that transmits broadcast service information signaling a broadcast service, and the address of an application upgrade server 800 that may receive additional service data, upon the IP address allocation. Related descriptions are provided with reference to Figs. 10 to 11.

Fig. 10 is a ladder diagram how a broadcast receiving device is allocated an IP address to receive a broadcast service through a broadcast service receiving application, according to an embodiment.

In an embodiment in Fig. 10, the DHCP server 300 operates according to the DHCPv4 as in Fig. 5.

The image display device 100 transmits, to the DHCP server 300, a DHCPv4 discover message that searches for a DHCP server, in step S1301.

The DHCP server 300 transmits a DHCPv4 offer message that notifies the DHCP server 300, in step S1303.

The image display device 100 transmits, through the IP communication unit 130, a DHCPv4 request message that requests for IP address allocation, in step S1305.

The DHCP server 400 transmits a DHCPv4 ACK message that allocates an IP address, in step S1307.

In this case, the image display device 100 may transmit image display device information to the DHCP server 300 through the IP communication unit 130, in step S1309. As described earlier, the image display device information may include at least one among the image display device identifier, the MAC address of the image display device 100, and OS information on the image display device 100.

Also, the DHCP server 300 may transmit the address of the service information server 500 and the address of the application upgrade server 800 in step S1311. The application upgrade server 800 and the service information server 500 may be integrated to become one server according to a particular embodiment. In this case, the DHCP server 300 may transmit a single server address. In a particular embodiment, the broadcast service information server 500 may transmit broadcast service information through multicasting through which broadcast service information is transmitted to many image display devices 100 at one time. In this case, the DHCP server 300 may transmit the multicast IP address and port address of the broadcast service information. In another particular embodiment, the broadcast service information server 500 may transmit the broadcast service information through unicast through which the broadcast service information is transmitted to a single image display devices 100 at one time.

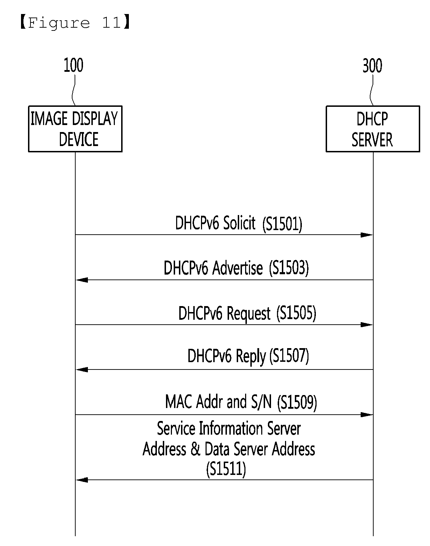

Fig. 11 is a ladder diagram that shows how a broadcast receiving device is allocated an IP address to receive a broadcast service through a broadcast service receiving application, according to another embodiment.

In an embodiment in Fig. 11, the DHCP server operates according to the DHCPv6 as in the embodiment in Fig. 6.

The image display device 100 transmits, to the DHCP server 300, a DHCPv6 solicit message that searches for a DHCP server, in step S1501.

The DHCP server 300 transmits a DHCPv6 advertise message that notifies the DHCP server 300, in step S1503.

The image display device 100 transmits, through the IP communication unit 130, a DHCPv6 request message that requests for IP address allocation, in step S1505.

The DHCP server 400 transmits a DHCPv6 reply message that allocates an IP address, in step S1507.

In this case, the image display device 100 may transmit image display device information to the DHCP server 300 through the IP communication unit 130, in step S1509. As described earlier, the image display device information may include at least one among the image display device identifier, the MAC address of the image display device 100, and OS information on the image display device 100.

Also, the DHCP server 300 may transmit the address of the service information server 500 and the address of the application upgrade server 800 in step S1511. As described earlier, the application upgrade server 800 and the service information server 500 may be integrated to become one server according to a particular embodiment. In this case, the DHCP server 300 may transmit a single server address. In a particular embodiment, the broadcast service information server 500 may transmit broadcast service information through multicasting through which broadcast service information is transmitted to many image display devices 100 at one time. In this case, the DHCP server 300 may transmit the multicast IP address and port address of the broadcast service information. In another particular embodiment, the broadcast service information server 500 may transmit the broadcast service information through unicast through which the broadcast service information is transmitted to a single image display devices 100 at one time. In this case, the broadcast service information may be transmitted as an XML file format.

Refer back to Fig. 7.

Unlike the embodiments in Figs. 10 and 11, in the case where the address of the broadcast service information server 500 and the address 800 of the application upgrade server are not received through the DHCP server 300, the image display device 100 receives the address of the broadcast service information 500 and the address 800 of the application upgrade server from the subscription information server 700.

In particular, the image display device 100 may transmit service subscription information and image display device information to the subscription information server 700 through the IP communication unit 130, in step S907. As described earlier, the service package subscription information may include a user identifier that may identify a user, and a password that corresponds to the user identifier. In particular, the user identifier and the password that corresponds thereto may be set when service package subscription is performed. In another particular embodiment, the service package subscription information may include a service package identifier that identifies the service package to which the user has subscribed. In another particular embodiment, the service package subscription information may include payment information that includes information on a service package payment method. As described earlier, the image display device information may include at least one among the image display device identifier that identifies the image display device 100, the MAC address of the image display device 100, and OS information on the image display device 100. In this case, the image display device identifier may be a serial number that is assigned when the image display device 100 is manufactured.

The subscription information server 700 may transmit the address of the service information server 500 and the address of the application upgrade server 800 in step S909. In this case, the subscription information server 700 may check whether the image display device is an image display device for a user who has been subscribed to a service package, based on at least one among the received service subscription information and the received image display device information. In the case where the image display device 100 is the image display device for the user who has subscribed to the service package, the subscription information server 700 may transmit the address of the service information server 500 and the address of the application upgrade server 800. As described earlier, the application upgrade server 800 and the service information server 500 may be integrated to become one server according to a particular embodiment. In this case, the subscription information server 700 may transmit a single server address. In a particular embodiment, the broadcast service information server 500 may transmit broadcast service information through multicasting through which broadcast service information is transmitted to many image display devices 100 at one time. In this case, the subscription information server 700 may transmit the multicast IP address and port address of the broadcast service information. In another particular embodiment, the broadcast service information server 500 may transmit the broadcast service information through unicast through which the broadcast service information is transmitted to a single image display devices 100 at one time.

The image display device 100 transmits version information on a broadcast service receiving application through the IP communication unit 130 in step S909.

In the case where there is a need to upgrade the broadcast service receiving application, the subscription information server 700 transmits an upgrade message representing that there is a need to upgrade the broadcast service receiving application, in step S911. In particular, the subscription information server 700 may compare the latest version of the broadcast service receiving application with the received version thereof to determine whether the upgrade is needed. For example, the subscription information server 700 may determine that the upgrade is needed, in the case where there is a higher version of broadcast service receiving application than the received version of broadcast service receiving application.

In the case where the upgrade message is received, the image display device 100 requests for higher version broadcast service receiving application data from the application upgrade server 800 through the IP communication unit 130, in step S913.

The application upgrade server 800 transmits, to the image display device 100, the higher version broadcast service receiving application data in step S915.

The image display device 100 installs the higher version of broadcast service receiving application through the control unit 150 in step S917. In a particular embodiment, after receiving the higher version of broadcast service receiving application, the image display device 100 may install the received application at a reserved time. In a particular embodiment, the image display device 100 may receive an input related to an installation time from a user, and install the broadcast service receiving application at the installation time that the user has input. For example, the image display device 100 may display a popup menu for setting an installation time to receive the input related to the installation time. In this case, a user may set dawn at which the user does not use the image display device 100, as the application installation time. In particular, in the case where the image display device 100 is turned off at a broadcast service receiving application installation reservation time, the image display device 100 may be turned on and then install the broadcast service receiving application. In this case, the image display device 100 may be turned off after the installation of the broadcast service receiving application is completed. In another particular embodiment, the image display device 100 may install the broadcast service receiving application when receiving, from a user, a command for turning off the image display device 100. In this case, the image display device 100 may be turned off after the installation of the broadcast service receiving application is ended. In another particular embodiment, the image display device 100 may install the broadcast service receiving application immediately after receiving higher version broadcast service receiving application data. In another particular embodiment, it is possible to install the broadcast service receiving application when the image display device 100 performs other operations without executing the broadcast service receiving application. In particular, when the image display device 100 performs other operations without executing the broadcast service receiving application, the image display device 100 may install the broadcast service receiving application through the background process that is performed without disturbing the usage of the image display device 100 of the user. In a particular embodiment, the image display device 100 may determine the upgrade method of such a broadcast service receiving application based on a user input.

The image display device 100 requests for broadcast service information from the broadcast service information server 500 through the IP communication unit 130 in step S921. The broadcast service information includes information that signals a broadcast service. Also, the broadcast service information may include CAS data that is needed to descramble a scrambled broadcast stream. The CAS data may include at least one among the entitlement content message (ECM) and the entitlement management message (EMM).

The broadcast service information server 500 transmits, to the image display device 100, broadcast service information in step S923.

The image display device 100 configures a channel map that includes broadcast service reception information, based on the broadcast service information through the control unit 150 in step S925. In particular, the channel map may include frequency information for broadcast service tuning.

The image display device 100 receives the broadcast service based on the channel map through the tuner 111 in step S927.

In particular, the image display device 100 may be allocated an IP address in the case where the IP address has not been allocated. Also, the image display device 100 may check whether there is a need to upgrade the application is needed, based on a version of broadcast service application. Also, the image display device 100 may transmit a check message with service subscription information. Also, the image display device 100 may receive broadcast service information that includes the CAS data. Also, the image display device 100 may configure a channel map. However, such an initialization operation may be omitted according to the current state of the image display device 100. For example, the image display device 100 may omit an IP address allocation request operation in the case where the IP address of the image display device 100 has been allocated. Also, the image display device 100 may omit a channel map configuration operation in the case where the channel map has already been configured.

The image display device 100 receives the broadcast service from a broadcast transmission server 900 through the broadcast receiving unit 110 in step S111. In particular, the image display device 100 may receive the broadcast service based on the broadcast service information. In particular, it is possible to receive the broadcast service based on the broadcast reception information that is included in the channel map.

As described earlier, the broadcast service information server 500 and the application upgrade server 800 may be integrated to become a single server. An embodiment is provided in which the broadcast service information server 500 and the application upgrade server 800 may be integrated to become a single server.

Other operations in the present embodiment are the same as those in the embodiment in Fig. 7. However, there is a difference in that the image display device 100 transmits a request for a higher version of broadcast service receiving application and a request for broadcast service information to a broadcast service information and application upgrade server 1000 in which the broadcast service information server 500 and the application upgrade server 800 are integrated, in steps S1115 and S1119. Also, there is a difference in that the image display device 100 receives higher version broadcast service receiving application data and broadcast service information from the broadcast service information and application upgrade server 1000 in steps S1117 and S1121.

In a particular embodiment, some or all of the VOD server 400, the broadcast service information server 500, the content provider server 600, the subscription information server 700, and the application upgrade server 800 that have been described earlier may be integrated to become a single server.

Refer back to Fig. 3.

The image display device 100 receives an input related to service package subscription cancellation in step S113.

The image display device 100 transmits a service package subscription cancellation request in step S115. In a particular embodiment, such a subscription cancellation request may however be performed in such a way that a user requests the subscription cancellation from the broadcast service provider through the phone, without passing through the image display device 100. In this case, the image display device 100 may receive an input related to the service package subscription cancellation and the operation of requesting the service package subscription cancellation may be omitted.

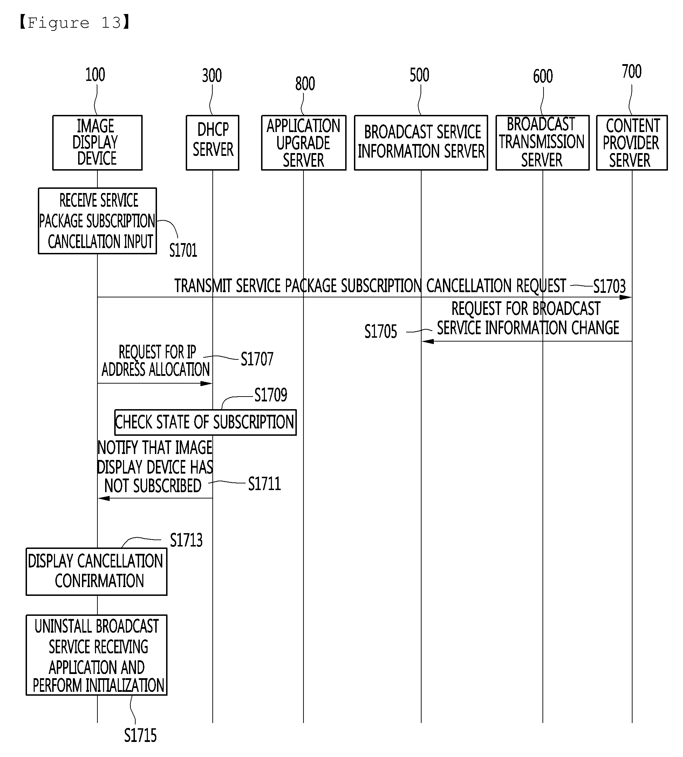

The image display device 100 installs the broadcast service receiving application in step S117. The un-installation of the broadcast service receiving application according to the service package subscription cancellation request and the service package subscription cancellation are described in Fig. 13.

Fig. 13 is a ladder diagram that shows how an image display device operates according to a user's service package subscription cancellation input, according to an embodiment.

The image display device 100 receives a service package subscription cancellation input in step S1701. In particular, the image display device 100 may receive, from a user, the input related to the service package subscription cancellation.

The image display device 100 transmits a service package subscription cancellation request message to the content provider server 600 in step S1703. In this case, the service package subscription cancellation request message may include at least one among service package subscription information and image display device information. ). As described earlier, the service package subscription information may include a user identifier that may identify a user, and a password that corresponds to the user identifier. In particular, the user identifier and the password that corresponds thereto may be set when service package subscription is performed. In another particular embodiment, the service package subscription information may include a service package identifier that identifies the service package to which the user has subscribed. In another particular embodiment, the service package subscription information may include payment information that includes information on a service package payment method. As described earlier, the image display device information may include at least one among the image display device identifier that identifies the image display device 100, the MAC address of the image display device 100, and OS information on the image display device 100. In this case, the image display device identifier may be a serial number that is assigned when the image display device 100 is manufactured.

The content provider server 600 transmits, to a broadcast service information server, a broadcast service information change request message according to the service package cancellation of the user of the image display device 100 in step S1705. In this case, the broadcast service information change request message may include at least one among service package subscription information and image display device information. The broadcast service information server 500 may change broadcast service information according to the broadcast service information change request. In particular, the broadcast service information server 500 may change CAS data that varies according to the allowable service and period of the image display device 100. In this case, the CAS data may include ECM and EMM.

The image display device 100 requests for IP address allocation from the DHCP server 300 in step S1707.

The DHCP server 300 checks whether the user of the image display device 100 has subscribed to a service package, in step S1709. In particular, the DHCP server 300 checks whether the user of the image display device 100 has subscribed to the service package, based on the MAC address of the image display device 100. To this end, the DHCP server 300 may transmit image display device information to the content provider server 600 and receive, from the content provider server 600, whether the user of the image display device 100 has subscribed to the service package. In particular, the DHCP server 300 may transmit the MAC address of the image display device 100 to the content provider server 600.

The DHCP server 300 transmits, to the image display device 100, that the user of the image display device 100 has not subscribed to the service, in step S1711. Accordingly, the image display device 100 may confirm that the cancellation of the service package subscription has been normally performed.

The image display device 100 displays that the service package has been normally cancelled through the control unit 150, in step S1713.

The image display device 100 installs the broadcast service receiving application through the control unit 150 in step S1715. Also, the image display device 100 may also delete data that the broadcast service receiving application uses. For example, the image display device 100 may also delete broadcast reception information and channel map information that are stored in the image display device. In this case, the image display device 100 may uninstall the broadcast service receiving application through the background process that does not disturb the usage of the image display device 100 of the user.

Through such an operation, the image display device 100 may easily cancel the service package even without removing, by a separate service engineer, the broadcast receiving device for enjoying the broadcast service.

The characteristics, structures, and effects described in the embodiments above are included in at least one embodiment but are not necessarily limited to one embodiment. Furthermore, the characteristic, structure, and effect illustrated in each embodiment may be combined or modified for other embodiments by a person skilled in the art. Thus, it would be construed that contents related to such a combination and such a variation are included in the scope of embodiments.

Embodiments are mostly described above. However, they are only examples and do not limit the present disclosure. A person skilled in the art may appreciate that many variations and applications not presented above may be implemented without departing from the essential characteristic of embodiments. For example, each component particularly represented in embodiments may vary. In addition, it should be construed that differences related to such a variation and such an application are included in the scope of the inventive concept defined in the following claims.

## Claims

1. An image display device comprising:
a broadcast signal receiving unit receiving a broadcast signal; and
a control unit installing and uninstalling, according to a user input, a broadcast service receiving application that receives a broadcast service in the broadcast signal.

2. The image display device according to claim 1, further comprising an internet protocol (IP) communication unit that transmits information on the image display device and information on a user of the image display device, to a subscription information server that manages information on a broadcast service package subscriber,
wherein the subscription information server changes broadcast service information on the broadcast service based on the information on the image display device and the information on the user of the image display device.

3. The image display device according to claim 2, wherein the information on the image display device comprises an image display device identifier that identifies the image display device.

4. The image display device according to claim 2, wherein the information on usage of the image display device comprises a user identifier that identifies the user of the image display device, and a password that corresponds to the user identifier.

5. The image display device according to claim 2, wherein the IP communication unit transmits a service package identifier that identifies a service package to which the user of the image display device subscribes, and
the subscription information server changes broadcast service information on the broadcast service based on the service package identifier.

6. The image display device according to claim 2, wherein the broadcast service information comprises conditional access system (CAS) data that is needed to descramble a scrambled broadcast stream.

7. The image display device according to claim 1, further comprising an internet protocol (IP) communication unit that transmits information on a version of the broadcast receiving application to a subscription information server managing information on a broadcast service package subscriber, and receives whether there is a need to upgrade the broadcast service receiving application.

8. The image display device according to claim 7, wherein the control unit upgrades the broadcast service receiving application to a higher version of broadcast service receiving application through a background process that is performed without usage of the image display device by a user.

9. The image display device according to claim 7, wherein the control unit upgrades the broadcast service receiving application to a higher version of broadcast receiving application at a time that is determined based on a user input.

10. The image display device according to claim 7, wherein the control unit upgrades the broadcast service receiving application to a higher version of broadcast receiving application, when a user's turn-off input related to the image display device is received.

11. A method of operating an image display device, the method comprising:
receiving a broadcast signal through a broadcast signal receiving unit; and
receiving a broadcast service in the broadcast signal through a broadcast service receiving application that is controlled by a control unit,
wherein the broadcast service receiving application is installed and un-installed according to a user user input.

12. The method according to claim 11, further transmitting information on the image display device and information on a user of the image display device, to a subscription information server that manages information on a broadcast service package subscriber, through an internet protocol (IP) communication unit,
wherein the subscription information server changes broadcast service information on the broadcast service based on the information on the image display device and the information on the user of the image display device.

13. The method according to claim 12, wherein the information on the image display device comprises an image display device identifier that identifies the image display device.

14. The method according to claim 12, wherein the information on usage of the image display device comprises a user identifier that identifies the user of the image display device, and a password that corresponds to the user identifier.

15. The method according to claim 12, wherein the transmitting of the information on the image display device and information on a user of the image display device, to the subscription information server comprises transmitting a service package identifier that identifies a service package to which the user of the image display device subscribes, and
the subscription information server changes broadcast service information on the broadcast service based on the service package identifier.

16. The method according to claim 12, wherein the broadcast service information comprises conditional access system (CAS) data that is needed to descramble a scrambled broadcast stream.

17. The method according to claim 11, further comprising:
transmitting version information on the broadcast receiving application, to a subscription information server that manages information on a broadcast service package subscriber, through an internet protocol (IP) communication unit; and
receiving whether there is a need to upgrade the broadcasting service receiving application, through the IP communication unit.

18. The method according to claim 17, further comprising upgrading, through a control unit, the broadcast service receiving application to a higher version of broadcast service receiving application through a background process that is performed without usage of the image display device by a user.

19. The method according to claim 17, further comprising upgrading, through a control unit, the broadcast service receiving application to a higher version of broadcast receiving application at a time that is determined based on a user input.

20. The method according to claim 17, further comprising upgrading, through the control unit, the broadcast service receiving application to a higher version of broadcast receiving application, when a user's turn-off input related to the image display device is received.
